# EUROPEAN PATENT SPECIFICATION

(11) **EP 2 813 792 B1**
(45) Date of publication and mention of the grant of the patent: **02.12.2015**
(21) Application number: 14166071.2
(22) Date of filing: 25.04.2014
(51) Int. Cl.: F28D 7/00, F28D 7/02, F28F 21/08, B23K 1/00, B23K 1/19, F28F 1/08

(54) **Twisted tube heat exchanger and method for manufacturing twisted tube heat exchanger**
Verdrillte Rohrwärmetauscher und Verfahren zur Herstellung von verdrillten Rohrwärmetauschern
Échangeur de chaleur à tube torsadé et procédé de fabrication d'échangeur de chaleur à tube torsadé

(30) Priority: 14.06.2013 JP 2013125425
(43) Date of publication of application: 17.12.2014
(73) Proprietor: Mitsubishi Electric Corporation, Chiyoda-ku Tokyo 100-8310 (JP)
(72) Inventor: Hayakawa, Mitsusada, Chiyoda-ku, Tokyo 100-8310 (JP); Sezai, Masashi, Chiyoda-ku, Tokyo 100-8310 (JP)
(74) Representative: Hopkin, Tobias J.B.

(56) References cited:
- WO-A1-2008/108336
- DE-C1- 19 909 368
- JP-A- 2008 274 426
- US-A- 3 468 371
- US-A- 4 351 389

## Description

### Technical Field

The present invention relates to a twisted tube heat exchanger to be used for a heat pump type water heater, and a method for manufacturing the twisted tube heat exchanger.

### Background Art

As a water-refrigerant heat exchanger to be used for a heat pump type water heater, for example, a twisted tube heat exchanger is known. A twisted tube heat exchanger is a water-refrigerant heat exchanger in which a twisted tube having a spiral groove on its circumference is used for water tubing, refrigerant tubing is wound up along the spiral groove on the circumference of the water tubing, and the water tubing and the refrigerant tubing are caulk-joined, the twisted tube heat exchanger being configured to perform heat exchange between the water flowing in the water tubing and the refrigerant flowing in the refrigerant tubing. The spiral groove provided in the water tubing has a function of generating turbulent flow on the water side, thereby improving the heat exchange performance.

The water tubing of the water-refrigerant heat exchanger is connected with external equipment via joint tubing. The joining between the water tubing and the joint tubing is performed by brazing. And, for the water tubing and the joint tubing, a copper member is generally used and, for example, phosphorus copper filler metal is used as the brazing material in such an occasion. For example, Japanese Patent Laid-Open No. 58-100995 discloses a method for joining copper members by brazing in which a low melting point brazing material containing 3.0 to 6.5 weight% of phosphorus, 12 to 23 weight% of tin, the balance being copper and inevitable impurities is used to reduce the brazing temperature, thereby preventing deterioration of the strength of the joined part. Moreover, Japanese Patent Laid-Open No. 60-231593 discloses a method for brazing copper members in which Zn- or Sn-added brazing material is used to prevent severe corrosion of the brazed part, for example, in an environment where sulfur-based corrosive substances such as hydrogen sulfide gas is present.

US-A-351389 discloses a twisted tube heat exchanger comprising tubing which is provided with crests and valley bottoms on the circumference thereof in a continuous and spiral form, and tubing which is spirally wound and secured along the shape of the crest and valley bottom on the circumference of the water tubing.

### Citation List

### Patent Literature

Patent Literature 1: Japanese Patent Laid-Open No. 58-100995
Patent Literature 2: Japanese Patent Laid-Open No. 60-231593

### Summary of the Invention

### Technical Problem

When phosphorus copper filler metal is used for the brazing material for joining copper members, there is no concern about corrosion if relevant components are used in ordinary atmosphere. However, when water tubing of a water-refrigerant heat exchanger for heating tap water or well water with a refrigerant is joined with phosphorus copper filler metal, there is risk that corrosion between dissimilar metals occurs by the influence of a potential difference between the water tubing which is a copper member and phosphorus copper filler metal in an underwater environment. To be more specific, since the phosphorus deoxidized copper tube used as the water tubing has a characteristic to be less noble with respect to phosphorus copper filler metal, it is anticipated that the water tubing is selectively corroded. Moreover, when the above described low melting point brazing material of Japanese Patent Laid-Open No. 58-100995 is used for joining the water tubing, the phosphorus deoxidized copper tube used as the water tubing becomes noble with respect to phosphorus copper filler metal, and thereby the brazing material is selectively corroded. In this respect, although the aforementioned Japanese

Patent Laid-Open No. 60-231593 shows a method of using Zn- or Sn-added brazing material to prevent corrosion of the brazed part, the contents of Zn and Sn are not defined so that complete anticorrosive effect cannot be expected.

The present invention has been made to solve the above described problems, and has its object to provide a twisted tube heat exchanger which can prevent the corrosion of a brazed joined part of water tubing, and a method for manufacturing the twisted tube heat exchanger.

### Means for solving the problems

According to the present invention, there is provided a twisted tube heat exchanger, comprising:
water tubing which is made of phosphorus deoxidized copper, and which is provided with plural rows of crests and valley bottoms on the circumference thereof in a continuous and spiral form for each row;
refrigerant tubing which is spirally wound up and secured along the shape of the crest and valley bottom on the circumference of the water tubing; and
joint tubing which is made of phosphorus deoxidized copper, and which is connected to an end of the water tubing, wherein
a joined part between the water tubing and the joint tubing is brazed with a brazing material of phosphorus copper filler metal containing 4.0 to 8.0 weight% of tin, and 6.8 to 8.0 weight% of phosphorus, but containing no silver.

According to the present invention, there is provided a method for manufacturing a twisted tube heat exchanger, comprising:
preparing water tubing which is made of phosphorus deoxidized copper, and which is provided with plural rows of crests and valley bottoms on the circumference thereof in a continuous and spiral form for each row;
fitting refrigerant tubing in a spiral form along the shape of crest and valley bottom on the circumference of the water tubing, and thereafter performing caulk-joining of a crest part of the water tubing; and
brazing a joined part between an end of the water tubing and joint tubing made of phosphorus deoxidized copper by using a brazing material of phosphorus copper filler metal containing 4.0 to 8.0 weight% of tin, and 6.8 to 8.0 weight% of phosphorus, but containing no silver.

### Advantageous Effect of Invention

According to the present invention, it becomes possible to provide a twisted tube heat exchanger which can prevent the corrosion of a brazed joined part of water tubing, and a method for manufacturing the twisted tube heat exchanger.

### Brief Description of the Drawings

Fig. 1 is a schematic sectional view in the longitudinal direction of water tubing of a twisted tube heat exchanger according to a first embodiment of the present invention.
Fig. 2 is an enlarged schematic sectional view in the longitudinal direction of the water tubing of a joined part between the twisted tube heat exchanger and the joint tubing in the first embodiment of the present invention.
Fig. 3 shows measured potentials of a phosphorus deoxidized copper tube and various kinds of phosphorus copper filler metal.

### Mode for Carrying Out the Invention

Hereafter, embodiments of the present invention will be described with reference to the drawings. It is noted that elements which are common to each figure are denoted by the same reference characters, thereby omitting repeated description thereof.

### First Embodiment

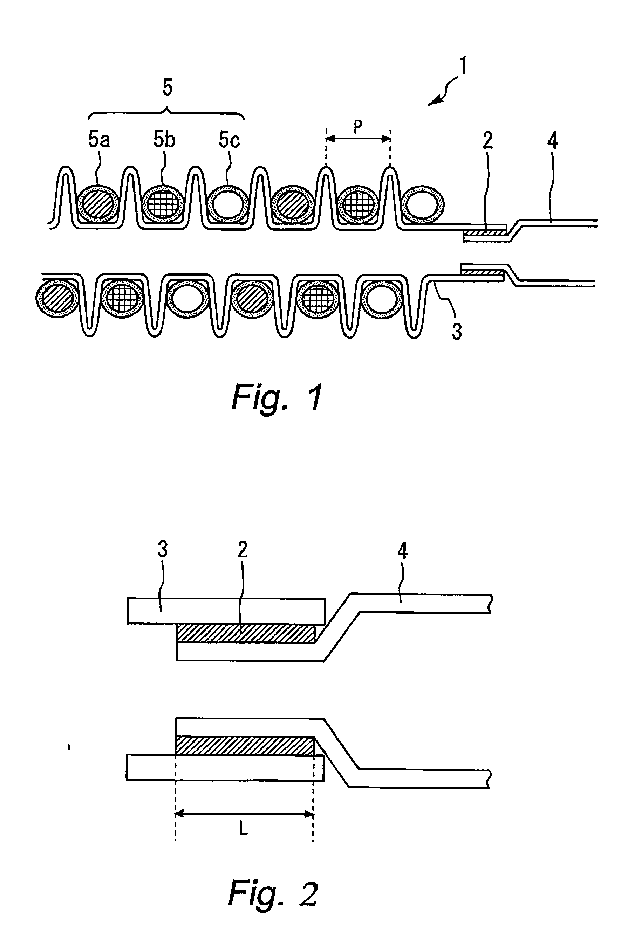

Fig. 1 is a schematic sectional view in the longitudinal direction of water tubing of a twisted tube heat exchanger according to a first embodiment of the present invention. As shown in Fig. 1, the twisted tube heat exchanger 1 employs as water tubing 3 a twisted tube which is provided with a plural (for example, three) rows of crests and valleys on the circumference thereof in a continuous and spiral form for each row. Plural rows of crests and valley bottoms are formed in the water tubing 3 by fixing both ends of a smooth tube of phosphorus deoxidized copper, inserting a mandrel into the inner diameter side thereof, and subjecting it to continuous twisting. In this occasion, by accurately controlling a spiral pitch P of the water tubing 3, it is made possible to perform sound fitting of refrigerant tubing 5 to be described later.

The refrigerant tubing 5 is wound around the circumference of the water tubing 3 in a spiral form along the shape of the crest and valley bottom of each row. The refrigerant tubing 5 is connected with a refrigerant circuit not shown, and has a refrigerant circulating thereinside. In Fig. 1, the refrigerant tubing 5 is divided into refrigerant tubes 5a, 5b, and 5c, which are wound around the circumference of the water tubing 3. The water tubing 3 and the refrigerant tubes 5a, 5b, and 5c are unified by fitting the refrigerant tubes 5a, 5b, and 5c into valley portions of the water tubing 3, thereafter caulk-joining crest portions. In this way, by providing multiple rows of crests and valleys in the water tubing 3, it is possible to optimize the path design by dividing the refrigerant tubing 5, and prevent heat leakage caused by the contact between adjacent refrigerant tubes. Hereafter, when the refrigerant tubes 5a, 5b, and 5c are particularly distinguished, they are simply referred to as "refrigerant tubing 5".

The water tubing 3, which is connected to external equipment not shown and located outside the apparatus, in which the twisted tube heat exchanger 1 is contained, via joint tubing 4, causes water to be circulated between the twisted tube heat exchanger 1 and the external equipment. The joined part between an end of the water tubing 3 and the joint tubing 4 is joined by brazing. It is noted that a phosphorus deoxidized copper tube is used for the joint tubing 4 as in the case of the above described water tubing 3.

Fig. 2 is an enlarged schematic sectional view in the longitudinal direction of the water tubing of a joined part between the twisted tube heat exchanger and the joint tubing in the first embodiment of the present invention. As shown in the figure, the joined part between an end of the water tubing 3 and the joint tubing 4 are brazed with a brazing material 2. Sn-containing phosphorus copper filler metal is used for the brazing material. The material properties of this brazing material are a characteristic feature of the twisted tube heat exchanger 1 of the present embodiment.

Phosphorus copper filler metal (BCuP 1 to 6) specified in JIS Standards are generally used for the brazing of copper tubes. The advantages of phosphorus copper filler metal are that it is inexpensive compared with silver solder, that it can be joined in a fluxless manner, and that there is no concern about corrosion between dissimilar metals in an ordinary atmosphere. However, the inner surface side of the water tubing of the water-refrigerant heat exchanger is always in an underwater environment. Therefore, in the twisted tube heat exchanger 1 of the present embodiment, there is risk that corrosion between dissimilar metals may occur in the joined part between the water tubing 3 and the joint tubing 4 shown in Fig. 2.

The occurrence of corrosion between dissimilar metals is influenced by the potential difference between metals in contact and the stagnation of water flow in the water tubing. For that reason, to prevent the corrosion of the joined part between the water tubing 3 and the joint tubing 4, materials for the water tubing 3 and the brazing material 2 need to be combined such that the potential difference therebetween is below the level of influence.

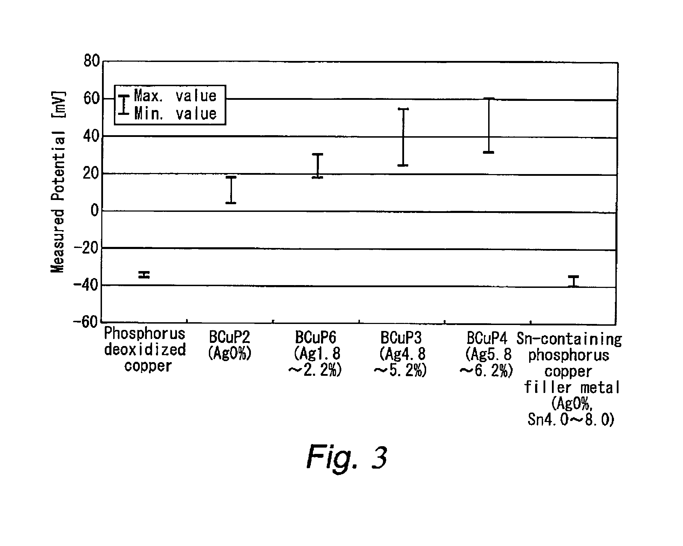

Fig. 3 shows measured potentials of a phosphorus deoxidized copper tube and various kinds of phosphorus copper filler metal. As shown in the figure, while the potential difference between the phosphorus deoxidized copper tube and phosphorus copper filler metal (BCuP 1 to 6) specified in the JIS Standards are 40 to 70 mV, the Sn-containing copper filler metal which contains 4.0 to 8.0 weight% of Sn (tin), and 6.8 to 8.0 weight% of P (phosphorus), and contains no silver shows a potential difference of about 0 to 5 mV. That is, if Sn-containing phosphorus copper filler metal having the above described material properties is used in the brazing of the phosphorus deoxidized copper tube, it is possible to set the potential difference between the both metals to be equal to or less than 5 mV even in a water environment, thus enabling the prevention of corrosion between dissimilar metals.

It is noted that generally, an overlapping margin L of a joined part in brazing is set to be equal to or more than 10 mm for the purpose of ensuring pressure resistance and preventing the intrusion of solder to the inside. However, when the overlapping margin of the joined part is set to be equal to or more than 10 mm, infiltration of solder may not necessarily be complete due to the variation in brazing operation and the like, resulting in occurrence of a gap. Accordingly, in the brazing operation of the water tubing 3 with the joint tubing 4 according to the present embodiment, it is preferable to set the overlapping length L of the joined part to be 5 to 7 mm. This makes it possible to secure the infiltration of solder, thereby preventing the occurrence of a gap. Thus, since the stagnation of water flow in the joined part can be eliminated while satisfying pressure resistance, it is possible to effectively prevent corrosion between dissimilar metals.

### Description of Reference characters

1: twisted tube heat exchanger
2: brazing material
3: water tubing
4: joint tubing
5: refrigerant tubing

## Claims

1. A twisted tube heat exchanger (1), comprising:
water tubing (3) which is made of phosphorus deoxidized copper, and which is provided with plural rows of crests and valley bottoms on the circumference thereof in a continuous and spiral form for each row;
refrigerant tubing (5) which is spirally wound up and secured along the shape of the crest and valley bottom on the circumference of the water tubing (3); and
joint tubing (4) which is made of phosphorus deoxidized copper, and which is connected to an end of the water tubing (3), wherein
a joined part between the water tubing (3) and the joint tubing (4) is brazed with a brazing material (2) of phosphorus copper filler metal containing 4.0 to 8.0 weight% of tin, and 6.8 to 8.0 weight% of phosphorus, but containing no silver.

2. The twisted tube heat exchanger (1) according to claim 1, wherein
a potential difference between the water tubing (3) and the joint tubing (4), and the brazing material (2) is equal to or less than 5 mv.

3. The twisted tube heat exchanger (1) according to claim 1 or 2, wherein
an overlapping length of the joined part between the water tubing (3) and the joint tubing (4) is 5 to 7 mm.

4. A method for manufacturing a twisted tube heat exchanger (1), comprising:
preparing water tubing (3) which is made of phosphorus deoxidized copper, and which is provided with plural rows of crests and valley bottoms on the circumference thereof in a continuous and spiral form for each row;
fitting refrigerant tubing (5) in a spiral form along the shape of crest and valley bottom on the circumference of the water tubing (3), and thereafter performing caulk-joining of a crest part of the water tubing (3); and
brazing a joined part between an end of the water tubing (3) and joint tubing (4) made of phosphorus deoxidized copper by using a brazing material (2) of phosphorus copper filler metal containing 4.0 to 8.0 weight% of tin, and 6.8 to 8.0 weight% of phosphorus, but containing no silver.

## Patentansprüche

1. Gewundener Rohrleitungswärmetauscher (1), umfassend:
eine Wasserrohrleitung (3), die aus Phosphor desoxydisiertem Kupfer hergestellt ist, und die mit mehreren Reihen aus Wellenkämmen und Talsohlen auf dem Umfang desselben in einer fortlaufenden und spiralartigen Form für jede Reihe bereitgestellt wird;
eine Kühlmittelrohrleitung (5), die spiralförmig aufgewickelt und entlang des Profils aus Wellenkamm und Talsohle auf dem Umfang der Wasserrohrleitung (3) befestigt ist; und
eine Verbindungsrohrleitung (4), die aus Phosphor desoxydisiertem Kupfer hergestellt ist, und die mit einem Ende der Wasserrohrleitung (3) verbunden ist, wobei
ein Verbundteil zwischen der Wasserrohrleitung (3) und der Verbindungsrohrleitung (4) mit einem Lötmaterial (2) aus einem Phosphor-Kupfer-Füllmaterial, das 4,0 bis 8,0 Gewichtsprozent Zinn und 6,8 bis 8,0 Gewichtsprozent Phosphor, aber kein Silber enthält, gelötet ist.

2. Gewundener Rohrleitungswärmetauscher (1) nach Anspruch 1, wobei eine Potentialdifferenz zwischen der Wasserrohrleitung (3) und der Verbindungsrohrleitung (4), und des Lötmaterials (2) gleich oder weniger als 5 mV beträgt.

3. Gewundener Rohrleitungswärmetauscher (1) nach Anspruch 1 oder 2, wobei eine Überlappungslänge des Verbindungsteils zwischen der Wasserrohrleitung (3) und der Verbindungsrohrleitung (4) 5 bis 7 mm beträgt.

4. Verfahren zur Herstellung eines gewundenen Rohrleitungswärmetauschers (1), umfassend:
Bereitstellen einer Wasserrohrleitung (3), die aus Phosphor desoxydisiertem Kupfer hergestellt ist, und die mit mehreren Reihen aus Wellenkämmen und Talsohlen auf dem Umfang desselben in einer fortlaufenden und spiralartigen Form für jede Reihe breitgestellt wird;
Anpassen einer Kühlmittelrohrleitung (5) in einer Spiralform entlang des Profils aus Wellenkamm und Talsohle auf dem Umfang der Wasserrohrleitung (3), und anschließendes Durchführen von Dichtungsverbinden eines Wellenkammteils der Wasserrohrleitung (3); und
Löten eines Verbundteils zwischen einem Ende der Wasserrohrleitung (3) und der Verbindungsrohrleitung (4), die aus Phosphor desoxydisiertem Kupfer hergestellt ist, unter Verwendung eines Lötmaterials (2) aus Phosphor-Kupfer-Füllmaterial, das 4,0 bis 8,0 Gewichtsprozent Zinn und 6,8 bis 8,0 Gewichtsprozent Phosphor, aber kein Silber enthält.

## Revendications

1. Échangeur de chaleur à tube torsadé (1), comprenant :
une tuyauterie d'eau (3) qui est fabriquée à partir de cuivre désoxydé au phosphore, et qui présente plusieurs rangées de crêtes et de sillons à la circonférence de celle-ci sous une forme continue et en spirale pour chaque rangée ;
une tuyauterie de réfrigérant (5) qui est enroulée en spirale et fixée suivant la forme de crête et de sillon à la circonférence de la tuyauterie d'eau (3) ; et
une tuyauterie collectrice (4) qui est fabriquée à partir de cuivre désoxydé au phosphore, et qui est raccordée à une extrémité de la tuyauterie d'eau (3), dans lequel
une partie jointive entre la tuyauterie d'eau (3) et la tuyauterie collectrice (4) est brasée avec un matériau de brasage (2) constitué d'un métal d'apport à base de cuivre-phosphore contenant de 4,0 à 8,0 % en poids d'étain, et de 6,8 à 8,0 % en poids de phosphore, mais ne contenant pas d'argent.

2. Échangeur de chaleur à tube torsadé (1) selon la revendication 1, dans lequel
une différence de potentiel entre la tuyauterie d'eau (3) et la tuyauterie collectrice (4), et le matériau de brasage (2) est inférieure ou égale à 5 mv.

3. Échangeur de chaleur à tube torsadé (1) selon la revendication 1 ou 2, dans lequel
une longueur de recouvrement de la partie jointive entre la tuyauterie d'eau (3) et la tuyauterie collectrice (4) est de 5 à 7 mm.

4. Procédé de fabrication d'un échangeur de chaleur à tube torsadé (1), comprenant :
la préparation d'une tuyauterie d'eau (3) qui est fabriquée à partir de cuivre désoxydé au phosphore, et qui présente plusieurs rangées de crêtes et de sillons à la circonférence de celle-ci sous une forme continue et en spirale pour chaque rangée ;
l'agencement d'une tuyauterie de réfrigérant (5) sous une forme en spirale suivant la forme de crête et de sillon à la circonférence de la tuyauterie d'eau (3), puis la réalisation d'un calfeutrage d'une partie en crête de la tuyauterie d'eau (3) ; et
le brasage d'une partie jointive entre une extrémité de la tuyauterie d'eau (3) et la tuyauterie collectrice (4) fabriquée à partir de cuivre désoxydé au phosphore à l'aide d'un matériau de brasage (2) constitué d'un métal d'apport à base de cuivre-phosphore contenant de 4,0 à 8,0 % en poids d'étain, et de 6,8 à 8,0 % en poids de phosphore, mais ne contenant pas d'argent.
